# EUROPEAN PATENT APPLICATION

(11) **EP 4 640 454 A1**
(43) Date of publication of application: **29.10.2025**
(21) Application number: 24172081.2
(22) Date of filing: 24.04.2024
(51) Int. Cl.: B60H 1/32

(54) **CLIMATE CONTROL SYSTEM**

(71) Applicant: Thermo King LLC, Minneapolis, MN 55420 (US)
(72) Inventor: KENNEDY, Pierce D, Galway H91 XHNO (IE); COONS, Paul Harrison, St. Louis Park, Minnesota 55416 (US); DONNELLAN, Wayne, Galway H91 (IE)
(74) Representative: Haseltine Lake Kempner LLP

(57) **Abstract**

Method of controlling a climate control system (14) comprising a first evaporator (28a) arranged to cool a first zone (20a), a first electronic expansion valve (30a) arranged to control a flow of a working fluid to the first evaporator (28a), a first temperature sensor (22a) arranged to sense a temperature of the first zone (20a), a second evaporator (28b) arranged to cool a second zone (20b), a second electronic expansion valve (30b) arranged to control a flow of the working fluid to the second evaporator (28b), and a second temperature sensor (22b) arranged to sense a temperature of the second zone (20b), the method comprising: receiving first temperature data from the first temperature sensor (22a), the first temperature data including information indicative of a first temperature at the first zone (20a), comparing the first temperature to a first temperature threshold, and outputting a second electronic expansion valve control signal to cause the second electronic expansion valve (30b) to attain a required aperture size based on the comparing.

## Description

### Field of the Invention

This invention relates to a climate control system for controlling a temperature of an interior space comprising a plurality of zones and to a method of controlling such a system.

### Background

In some cases, a climate control system, such as a refrigeration system, may have multiple zones that must be controlled separately. The zones may be controlled separately by adjusting a flow rate of a working fluid to the different zones based on a sensed temperature in each zone or a zone prioritisation. The flow rate may be governed by a solenoid valve that may allow and prevent flow to different zones selectively.

However, such control of zones may leave one or more zones with no working fluid flow for a period of time, meaning that the temperature in that zone may change undesirably.

The present invention looks to address this issue.

### Summary of the Invention

According to a first aspect of the invention, there is provided a method of controlling a climate control system for controlling a temperature of an interior space comprising a plurality of zones, the system comprising: a first evaporator arranged to cool a first zone, a first electronic expansion valve arranged to control a flow of working fluid to the first evaporator, a first temperature sensor arranged to sense a temperature of the first zone, a second evaporator arranged to cool a second zone, a second electronic expansion valve arranged to control a flow of working fluid to the second evaporator, and a second temperature sensor arranged to sense a temperature of the second zone, the method comprising: receiving first temperature data from the first temperature sensor, the first temperature data including information indicative of a first temperature at the first zone; comparing the first temperature to a first temperature threshold; and outputting a second electronic expansion valve control signal to cause the second electronic expansion valve to attain a required aperture size based on the comparing.

With such an arrangement, the electronic expansion valve(s) may be used to control mass flow rates as well as superheat temperatures in the respective zones. For instance, where a greater mass flow rate of working fluid is required in the first zone, the electronic expansion valve coupled to the second evaporator may be further closed to reduce an aperture size of the electronic expansion valve. This may reduce the mass flow rate to the second evaporator and accordingly may increase the mass flow rate in the first evaporator.

The closing, in particular the partial closing, of the second electronic expansion valve may also have a secondary effect of reducing a pressure in the second evaporator. By reducing the pressure in the second evaporator, heat transfer to the second evaporator may be improved per unit mass of working fluid. The second evaporator may therefore have improved cooling capacity when the reduction in mass flow rate is considered.

An electronic expansion valve may have a variable aperture size. The aperture size may be a space through which fluid may flow. It will be understood that a smaller aperture size may restrict fluid flow and may cause a pressure drop across the electronic expansion valve. The electronic expansion valve may be operable to attain a plurality of aperture sizes between fully open and fully closed. The aperture size may alternatively be referred to as a closing position of the electronic expansion valve. The method may further comprise determining a required aperture size of the second electronic expansion valve based on the comparing.

The method may further comprise determining a required mass flow rate of working fluid based on the comparison of the first temperature to the first temperature threshold, and the required aperture size may be determined based on the required mass flow.

In conventional use of electronic expansion valves, the valves are used to maintain a consistent superheat in an evaporator. In this case, flow of refrigerant may be controlled by a separate solenoid valve. However, by determining a required mass flow rate of working fluid and controlling an electronic expansion valve on this basis, the requirement for a further solenoid valve may be removed.

Based on the first temperature being above the first temperature threshold, the required aperture size of the second electric expansion valve may a more closed aperture size of the second electric expansion valve than an immediately previous aperture size of the second electric expansion valve. In this way, the system may be controlled to provide a greater mass flow rate of working fluid to the first evaporator to cool the first zone. The system may also be controlled to provide a greater pressure drop on entry to the second evaporator. Accordingly, there may be a lower pressure in the second evaporator than in the first evaporator.

The method may further comprise: receiving second temperature data from the second temperature sensor, the second temperature data including information indicative of a second temperature at the second zone comparing the second temperature to a second temperature threshold; and outputting a first electronic expansion valve control signal to cause the first electronic expansion valve to attain a required aperture size of the second electronic expansion valve based on the comparing. This may represent a symmetry of the system, and both zones may be controlled by restriction of flow of working fluid to the other.

The method may further comprise determining a required aperture size of the first electronic expansion valve based on the comparing. Determining the required aperture sizes of the first and second electronic expansion valves may comprise determining a more closed aperture size for one of the first and the second electronic expansion valves and determining a less closed aperture size for the other of the first and the second electronic expansion valves. This may result in a relatively consistent pressure on the compressor of the system, improving the longevity of the system, while allowing a mass flow rate to be varied across different zones.

The aperture sizes of the first and second expansion valves may both be partially open. In this way, mass flow rate of working fluid may be distributed to the evaporators without either being left with no cooling capacity. The pressure drop on entry to the evaporator related to the electronic expansion valve having a smaller aperture size may also be increased, providing improved cooling capacity.

The method may further comprise receiving a zone prioritisation indication from a user, the zone prioritisation indicating a relative priority of the first and second zones. In this way, more temperature-sensitive goods may be controlled more closely than less temperature-sensitive goods, allowing the system to be useable with a greater range of goods. For example, the prioritised zone may receive a greater mass flow of coolant when required, so as to restore a temperature of the zone to below a threshold temperature more quickly.

The method may further comprise, based on a determination that the temperatures of first and second zones are both above a respective temperature threshold, determining a required aperture size of the first and/or second electronic expansion valve based on the relative prioritisation of the first and second zones. In this way, the system may control the temperature of a more important or more sensitive cargo better, allowing the cargo to be returned to a desired temperature more quickly.

Determining the required aperture sizes may comprise determining a greater required aperture size of the first electronic expansion valve than of the second electronic expansion valve based on the first zone having a greater prioritisation than the second zone. In this way, a greater mass flow rate of working fluid to the prioritised zone may be attained, allowing improved control of higher priority cargo. The determined aperture sizes of the prioritised and de-prioritised zones may both be at least partially open, allowing cooling of both zones, but at differing rates.

The first and second zones may have different temperature thresholds. For example, the first zone may refrigerate fresh produce and the second zone may refrigerate frozen produce. For example, one of the first and second temperature thresholds may be above 0°C and the other of the first and second temperature thresholds may be below 0°C. In this way, the system may control a temperature of a frozen cargo and of a non-frozen cargo.

The first and second zones may be separate enclosed spaces. In this way, the first and second zones may be thermally insulated from each other to allow the zones to be maintained at different temperatures.

According to a second aspect of the invention, there is provided a control system for controlling a climate control system, the control system comprising one or more processors collectively configured to carry out the method of the first aspect.

According to a third aspect of the invention, there is provided a climate control system for controlling a temperature of an interior space comprising a plurality of zones, the system comprising: a compressor arranged to increase a pressure of a working fluid; a condenser arranged to allow heat transfer from the working fluid; a first evaporator arranged to allow heat transfer to the working fluid from a first zone; a second evaporator arranged to allow heat transfer to the working fluid from a second zone; a first electronic expansion valve arranged to reduce a pressure of the working fluid entering the first evaporator; a second electronic expansion valve arranged to reduce a pressure of the working fluid entering the second evaporator; a first temperature sensor arranged to sense a first temperature in the first zone, a second temperature sensor arranged to sense a second temperature in the second zone, and a control system configured to: control the first electronic expansion valve based at least partially on data from the second temperature sensor, and control the second electronic expansion valve based at least partially on data from the first temperature sensor.

Such a climate control system may exhibit improved performance in restoring a first zone to a desired temperature without an undesirable impact on the temperature control of a second zone due to simultaneous managing of mass flow rate into an evaporator of one zone and adjustment of pressure in an evaporator of another zone. The system may also not require a solenoid valve that is commonly used for mass flow rate control into different zones.

The control system may be configured to control the first electric expansion valve based on data from the first and second temperature sensors and to control the second electric expansion valve based on data from the first and second temperature sensors. In this way, both electronic expansion valves may be controlled to manage mass flow rates and pressure drops in the two evaporators.

It will be understood that the system may comprise any number of further zones and that each zone may be temperature-controlled by a respective evaporator and electronic expansion valve. Each zone may also comprise a temperature sensor for sensing a temperature in the zone. The electronic expansion valves and temperature sensors may all be coupled to the control system to receive commands therefrom and to transfer data thereto respectively.

The control system may comprise one or more thermal expansion valves. In some cases, flow of working fluid to some evaporators may be controlled by thermal expansion valves to maintain a constant superheat and flow of working fluid to other evaporators may be controlled by electronic expansion valves. This may allow asymmetrical control of different zones, such as where one zone may require more accurate temperature control that another zone.

It will be understood that features and properties described with respect to one aspect of the invention may be applied to other aspects of the invention. For instance, the system of the third aspect may comprise the control system of the second aspect and the control system of the second aspect may be arranged to carry out the method of the first aspect.

### Brief Description of the Drawings

Specific embodiments of the invention are now described, by way of example only, with reference to the following drawings, in which:
Figure 1 is a schematic drawing of a vehicle incorporating a climate control system according to the invention;
Figure 2 is a schematic drawing of a climate control system according to the invention; and
Figure 3 is a flow chart illustrating a method of controlling a climate control system according to the invention.

### Detailed Description

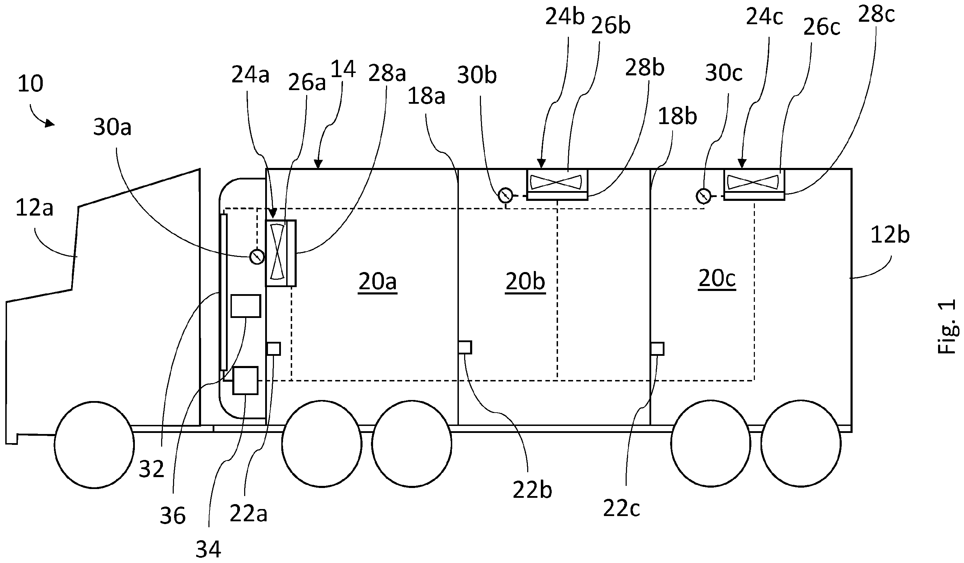

Figure 1 shows a vehicle 10 having a climate control system 14. The vehicle 10 is formed of a prime mover 12a and a refrigerated box 12b. It will be understood that the climate control system 14 may be incorporated in any vehicle, such as a straight truck, a lorry, a van, a train or any marine or intermodal application. The climate control system 14 may be alternatively used outside a vehicle, such as in a warehouse or retail building.

Within the refrigerated box 12b, the climate control system 14 is arranged to control a temperature of a plurality of different temperature-controlled zones 20a, 20b, 20c. While the climate control system 14 is arranged to control a temperature of three zones, it will be understood that there may be any number of temperature-controlled zones, such as 2, 4, 5 or more. The temperature-controlled zones are separated by partition walls 18a, 18b. The partition walls 18a, 18b may be thermally insulative in order to allow the zones 20a, 20b, 20c to be more easily controlled at different temperatures. The partition walls 18a, 18b may be of any form.

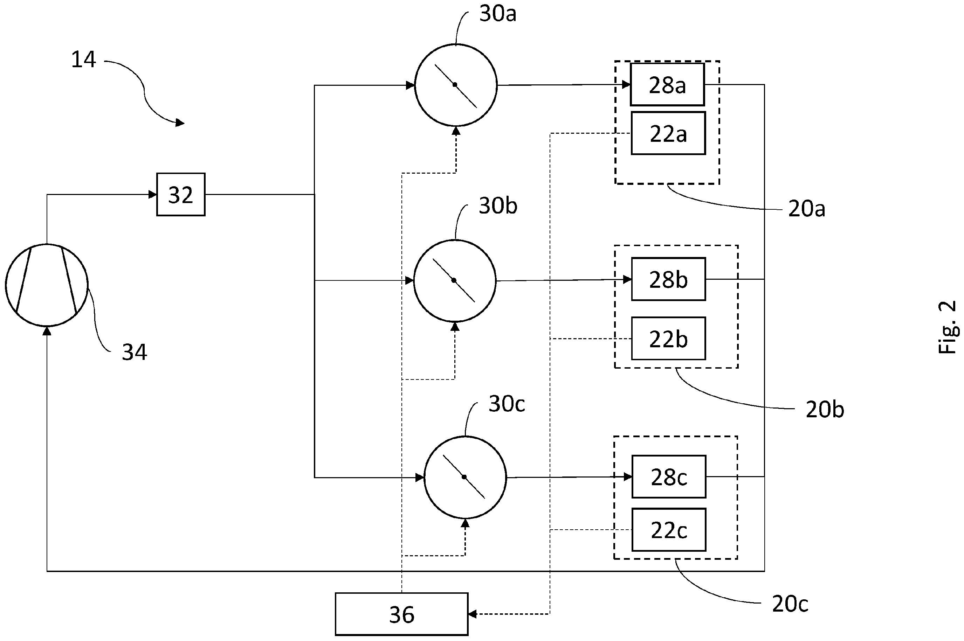

The climate control system 14 is now described with reference to Figure 2, which shows a schematic diagram of the climate control system 14. The climate control system 14 circulates a working fluid, that may be a refrigerant, about a circuit. At a compressor 34, the pressure and temperature of the working fluid are increased. This may result in the working fluid becoming a hot, high pressure gas.

The working fluid then enters a heat exchanger 32, which may be a condenser 32, which is arranged to allow heat transfer to the environment from the working fluid. The working fluid may at least partially condense in the heat exchanger 32 to become a low temperature, high pressure liquid or liquid-gas mixture.

The working fluid then passes through a plurality of electronic expansion valves 30a, 30b, 30c arranged in parallel. The electronic expansion valves 30a, 30b, 30c are arranged to cause a pressure drop in the working fluid at substantially constant enthalpy. The working fluid may then become a low-temperature, low-pressure liquid-gas mixture.

Each of the electronic expansion valves 30a, 30b, 30c is arranged in series with a respective evaporator 28a, 28b, 28c, the evaporators 28a, 28b, 28c being arranged downstream of the electronic expansion valves 30a, 30b, 30c. The respective evaporators 28a, 28b, 28c are arranged to allow heat transfer between the working fluid inside the evaporators 28a, 28b, 28c and air outside the evaporators 28a, 28b, 28c. The working fluid in each evaporator 28a, 28b, 28c may therefore receive heat from air in the respective temperature-controlled zone 20a, 20b, 20c. In this way, the working fluid may undergo evaporation to become a low-temperature gas and in doing so may cool the air within the temperature-controlled zone 20a, 20b, 20c.

To improve heat transfer between the evaporators 28a, 28b, 28c and the air in the respective temperature-controlled zones 20a, 20b, 20c, the climate control system 14 may further comprise a blower 28a, 28b, 28c in one or more of the zones. The evaporators 28a, 28b, 28c may each be adjacent to a respective blower 28a, 28b, 28c, which may blow air onto and through the respective evaporator, to improve the amount of heat energy transferred to the working fluid.

In each temperature-controlled zone 20a, 20b, 20c, there is a temperature sensor 22a, 22b, 22c arranged to determine a temperature in the respective zone 20a, 20b, 20c. The temperature sensors 22a, 22b, 22c may be arranged behind the blowers relative to an airflow direction through the blowers and may be arranged to sense a return air temperature in the zones. The return air temperature is a temperature of air that has circulated through the zone and is returning to the evaporator. This may provide a more accurate indication of a temperature experienced by goods in the temperature-controlled zone.

The climate control system 14 may be controlled by a controller 36. The controller 36 may contain one or more processors arranged to carry out a control method to control the climate control system 14. The controller may comprise a memory storing instructions to carry out the control method. The controller 36 may also have one or more input ports arranged to receive data and one or more output ports arranged to output control signals. The controller 36 is arranged to receive temperature data from the temperature sensors 22a, 22b, 22c and to output electronic expansion valve control signals to control the opening of the electronic expansion valves 30a, 30b, 30c.

The electronic expansion valves 30a, 30b, 30c may be controlled to carry out two functions. In general, the electronic expansion valves 30a, 30b, 30c may open to different degrees to control pressure drops across the electronic expansion valves. Due to the pressure drop, the working fluid may evaporate, resulting in a superheat in the subsequent evaporator. The degree to which each electronic expansion valve is open, referred to herein as the aperture size, may therefore be controlled in order to control an evaporation rate of the working fluid and a superheat in each evaporator. Further, where the electronic expansion valves may have substantially different levels of closing, the mass flow rate of working fluid into the different evaporators may be controlled. For example, if a first electronic expansion valve is substantially closed and a second electronic expansion valve is substantially open, there will be a greater mass flow rate of working fluid through the second electronic expansion valve, and accordingly through an evaporator downstream of the second electronic expansion valve. This may result in improved cooling by the second evaporator.

The controller 36, may therefore control an orifice size of the electronic expansion valves based on temperature data received from the temperature sensors.

It will be understood that the climate control system 14 may include further features that are not shown. For example, the climate control system 14 may include an economiser and/or a receiver. One or more zones may also have a plurality of evaporators associated with them. In some cases a single electronic expansion valve may be arranged to supply fluid to a plurality of evaporators that may be arranged in parallel or in series.

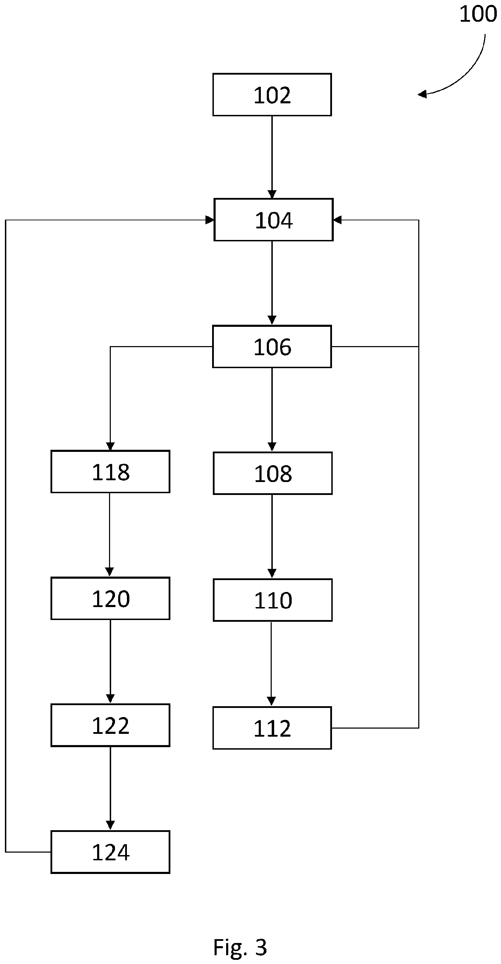

The function of the controller 36 may be to control the climate control system 14 accordance with the method illustrated by the flowchart 100 of figure 3.

At step 102, the controller may receive temperature threshold information from a user and/or the controller may receive an indication of a priority of one or more of the temperature controlled zones. The priority of zones may indicate an importance of goods or an importance of maintaining the zone at the required temperature. For example, a prioritised zone may receive a higher mass flow rate of working fluid when multiple zones are outside a required temperature threshold, such that the prioritised zone is restored to the required temperature more quickly than the non-prioritised zone.

At step 104, the controller may receive temperature data from the temperature sensors, the temperature data being indicative of the temperatures in the respective zones. The temperature data may be received in real-time to indicate current temperatures of the zones and it will be understood that the temperature data may be received continuously or regularly at a temperature sample frequency.

At step 106, the controller may compare the received temperature data to the temperature threshold value(s). Where the climate control system is a refrigeration system, the controller may determine whether each of the received temperatures is greater than the respective required temperature or required temperature threshold.

If it is determined that the temperatures of the zones are all within the required temperature ranges, the controller may make no changes and may return to step 104 to receive further temperature data at a later time.

In the case that one zone has a temperature that is greater than a respective temperature threshold, the controller may determine that a greater mass flow of coolant is required to the zone which has a temperature greater than the threshold temperature value. In this case, the method may move to step 108.

Alternatively, if it is determined that more than one zone has a temperature above a temperature threshold, the method may move to step 118.

At step 108, the controller may determine a required mass flow of coolant to restore the temperature in the zone for which the temperature is outside the required temperature range. The mass flow rate may be determined based on system parameters and the known overall working fluid mass flow rate in the system. In some cases, step 108 may be missed and the controller may determine required aperture sizes of the electronic expansion valves based on the temperatures of the zones directly. In some cases, the required mass flow rate or aperture size may be determined based on priority of a zone, such as a requirement to maintain a minimum cooling capacity to a particular zone.

At step 110, based on the determined required mass flow rate, the controller may determine a required aperture size for one or more of the electronic expansion valves. In particular, the controller may determine a required aperture size of an electronic expansion valve for a different zone from the zone having a temperature above the temperature threshold. The controller may determine that an electronic expansion valve of the different zone should close further, optionally the controller may determine that all electronic expansion valves not related to the zone having a temperature above the threshold temperature should close further. This may direct a greater mass flow rate of working fluid into the evaporator of the zone having a temperature outside the required temperature range. It may be determined that all electronic expansion valves should be at least partially open. It will be understood that that aperture size may not necessarily be determined numerically and that the method may involve determining an increase or decrease in aperture size or selection of an electronic expansion valve setting.

At step 112, the controller may output an electronic expansion valve control signal to cause one or more of the electronic expansion valves to attain the required aperture size to cause the required mass flow rate of working fluid into the evaporator associated with the zone having a temperature outside the required temperature range to flow therethrough.

Where the further closed electronic expansion valve(s) remain partially open, there may be a greater pressure drop over the more closed electronic expansion valve(s). This may result in a lower pressure in the associated evaporator(s) and also may result in a greater superheat in the evaporator(s). In turn, this may result in a smaller reduction of heat transfer into the evaporator of the respective zones following the reduction in mass flow rate through the evaporator(s).

Where it is determined that more than one zone has a temperature above the respective temperature threshold, the method may move to step 118 to determine whether any zone should be prioritized above another. At step 118, based on the priority data received at step 102, the controller may determine whether to provide a greater mass flow rate to one zone than to another.

If a zone is indicated to have a higher priority than another zone, the higher priority zone may receive a greater mass flow of working fluid than the lower priority zone. The level of prioritisation may be a question of user selection. In some cases, no zone may be prioritised and the mass flow rate of working fluid may be the same in all zones when the zones have temperatures above the respective threshold temperatures. In other cases, the mass flow rate of working fluid may be determined based on the relative differences between the temperatures of the zones and the temperature thresholds of the zones.

At step 120, based on the comparison of the temperatures to the temperature thresholds and the zone prioritisation (if any), the controller may determine a required flow rate for each zone.

At step 122, the controller may determine the required aperture sizes of the electronic expansion valves based on the prioritisation and the temperature data. In particular, where a plurality of zones have temperatures above their respective temperature thresholds and one of those zones has a higher priority than another, the controller may determine that the higher priority zone may have a larger required orifice size and the lower priority zone may have a smaller, non-zero required orifice size. It will be understood that that aperture size may not necessarily be determined numerically and that the method may involve determining an increase or decrease in aperture size or selection of an electronic expansion valve setting.

The zone having the smaller orifice size may have a lower mass flow rate through the evaporator, but a greater pressure drop on entry, allowing improved cooling in lower priority zones relative to known systems.

At step 122, the controller may output an electronic expansion valve control signal to cause the electronic expansion valves to attain the required aperture size to cause the required mass flow rate of working fluid into the evaporators associated with the zones having a temperature outside the required temperature range to flow therethrough.

## Claims

1. A method of controlling a climate control system for controlling a temperature of an interior space comprising a plurality of zones, the system comprising:
a first evaporator arranged to cool a first zone,
a first electronic expansion valve arranged to control a flow of working fluid to the first evaporator,
a first temperature sensor arranged to sense a temperature of the first zone,
a second evaporator arranged to cool a second zone,
a second electronic expansion valve arranged to control a flow of working fluid to the second evaporator, and
a second temperature sensor arranged to sense a temperature of the second zone,
the method comprising:
receiving first temperature data from the first temperature sensor, the first temperature data including information indicative of a first temperature at the first zone;
comparing the first temperature to a first temperature threshold; and
outputting a second electronic expansion valve control signal to cause the second electronic expansion valve to attain a required aperture size based on the comparing.

2. The method of claim 1, further comprising determining a required mass flow of working fluid based on the comparison of the first temperature to the first temperature threshold, and wherein the outputting of the second electronic expansion valve control signal is based on the required mass flow.

3. The method of claim 1 or 2, wherein, based on the first temperature being above the first temperature threshold, outputting the second electronic expansion valve control signal comprises outputting the second electronic expansion valve control signal valve to cause the aperture size of the second electric expansion valve to reduce.

4. The method of any preceding claim, further comprising:
receiving second temperature data from the second temperature sensor, the second temperature data including information indicative of a second temperature at the second zone;
comparing the second temperature to a second temperature threshold; and
outputting a first electronic expansion valve control signal to cause the first electronic expansion valve to attain a required aperture size of the first electronic expansion valve based on the comparing.

5. The method of claim 4, wherein outputting the first and second electronic expansion valve control signals comprises causing an aperture size for one of the first and the second electronic expansion valves to reduce and causing an aperture size for the other of the first and the second electronic expansion valves to increase.

6. The method of any preceding claim, further comprising receiving a zone prioritisation indication from a user, the zone prioritisation indicating a relative priority of the first and second zones.

7. The method of claim 6, further comprising, based on a determination that the first temperature is above the first temperature threshold and the second temperature is above the second temperature threshold, outputting the first and/or second electronic expansion valve control signals based on the relative priority of the first and second zones.

8. The method of claim 7, wherein outputting the first and second electronic expansion valve control signals comprises outputting the first and second electronic expansion valve control signals to cause the aperture size of first electronic expansion valve to be greater than the aperture size of the second electronic expansion valve based on the first zone having a higher prioritisation than the second zone.

9. The method of any preceding claim, wherein one of the first and second temperature thresholds is above 0°C and the other of the first and second temperature thresholds is below 0°C.

10. The method of any preceding claim, wherein the first and second zones are separate enclosed spaces.

11. A control system for controlling a climate control system, the control system comprising one or more processors collectively configured to carry out the method of any preceding claim.

12. A climate control system comprising:
a compressor arranged to increase a pressure of a working fluid;
a condenser arranged to allow heat transfer from the working fluid;
a first evaporator arranged to allow heat transfer to the working fluid from a first zone;
a second evaporator arranged to allow heat transfer to the working fluid from a second zone;
a first electronic expansion valve arranged to reduce a pressure of the working fluid entering the first evaporator;
a second electronic expansion valve arranged to reduce a pressure of the working fluid entering the second evaporator;
a first temperature sensor arranged to sense a first temperature in the first zone,
a second temperature sensor arranged to sense a second temperature in the second zone, and
a control system configured to:
control the first electronic expansion valve based at least partially on data from the second temperature sensor, and
control the second electronic expansion valve based at least partially on data from the first temperature sensor.

13. The climate control system of claim 12, wherein the system does not further comprise a solenoid valve for controlling a mass flow rate of working fluid into the first and/or second evaporators.

14. The climate control system of claim 12 or 13, wherein the control system is configured to:
control the first electric expansion valve based at least partially on data from the first and second temperature sensors, and
control the second electric expansion valve based at least partially on data from the first and second temperature sensors.

15. The climate control system of claim 12, 13 or 14, wherein the control system is the control system of claim 11.

## Amended claims

### Amended claims in accordance with Rule 137(2) EPC.

1. A method of controlling a climate control system for controlling a temperature of an interior space comprising a plurality of zones, the system comprising:
a first evaporator (28a) arranged to cool a first zone (20a),
a first electronic expansion valve (30a) arranged to control a flow of a working fluid to the first evaporator,
a first temperature sensor (22a) arranged to sense a temperature of the first zone,
a second evaporator (28b) arranged to cool a second zone (20b),
a second electronic expansion valve (30a) arranged to control a flow of the working fluid to the second evaporator, and
a second temperature sensor (22b) arranged to sense a temperature of the second zone,
the method comprising:
receiving first temperature data from the first temperature sensor, the first temperature data including information indicative of a first temperature at the first zone;
comparing the first temperature to a first temperature threshold; and
outputting a second electronic expansion valve control signal to cause the second electronic expansion valve to attain a required aperture size based on the comparing,
**characterised in that**:
the first and second electronic expansion valves are arranged in parallel.

2. The method of claim 1, further comprising determining a required mass flow of the working fluid based on the comparison of the first temperature to the first temperature threshold, and wherein the outputting of the second electronic expansion valve control signal is based on the required mass flow.

3. The method of claim 1 or 2, wherein, based on the first temperature being above the first temperature threshold, outputting the second electronic expansion valve control signal comprises outputting the second electronic expansion valve control signal to cause the aperture size of the second electronic expansion valve to reduce.

4. The method of any preceding claim, further comprising:
receiving second temperature data from the second temperature sensor, the second temperature data including information indicative of a second temperature at the second zone;
comparing the second temperature to a second temperature threshold; and
outputting a first electronic expansion valve control signal to cause the first electronic expansion valve to attain a required aperture size of the first electronic expansion valve based on the comparing.

5. The method of claim 4, wherein outputting the first and second electronic expansion valve control signals comprises causing an aperture size for one of the first and the second electronic expansion valves to reduce and causing an aperture size for the other of the first and the second electronic expansion valves to increase.

6. The method of claim 4 or 5, further comprising receiving a zone prioritisation indication from a user, the zone prioritisation indicating a relative priority of the first and second zones.

7. The method of claim 6, further comprising, based on a determination that the first temperature is above the first temperature threshold and the second temperature is above the second temperature threshold, outputting the first and/or second electronic expansion valve control signals based on the relative priority of the first and second zones.

8. The method of claim 7, wherein outputting the first and second electronic expansion valve control signals comprises outputting the first and second electronic expansion valve control signals to cause an aperture size of first electronic expansion valve to be greater than an aperture size of the second electronic expansion valve based on the first zone having a higher prioritisation than the second zone.

9. The method of any preceding claim, wherein one of the first and second temperature thresholds is above 0°C and the other of the first and second temperature thresholds is below 0°C.

10. The method of any preceding claim, wherein the first and second zones are separate enclosed spaces.

11. A control system for controlling a climate control system, the control system comprising one or more processors collectively configured to carry out the method of any preceding claim.

12. A climate control system comprising:
a compressor (34) arranged to increase a pressure of a working fluid;
a condenser (32) arranged to allow heat transfer from the working fluid;
a first evaporator (28a) arranged to allow heat transfer to the working fluid from a first zone (20a);
a second evaporator (28b) arranged to allow heat transfer to the working fluid from a second zone (20b);
a first electronic expansion valve (30a) arranged to reduce a pressure of the working fluid entering the first evaporator;
a second electronic expansion valve (30b) arranged to reduce a pressure of the working fluid entering the second evaporator;
a first temperature sensor (22a) arranged to sense a first temperature in the first zone,
a second temperature sensor (22b) arranged to sense a second temperature in the second zone, and
a control system (14) configured to:
control the first electronic expansion valve based at least partially on data from the second temperature sensor, and
control the second electronic expansion valve based at least partially on data from the first temperature sensor,
**characterised in that**:
the first and second electronic expansion valves are arranged in parallel.

13. The climate control system of claim 12, wherein the system does not further comprise a solenoid valve for controlling a mass flow rate of the working fluid into the first and/or second evaporators.

14. The climate control system of claim 12 or 13, wherein the climate control system is configured to:
control the first electronic expansion valve based at least partially on data from the first and second temperature sensors, and
control the second electronic expansion valve based at least partially on data from the first and second temperature sensors.

15. The climate control system of claim 12, 13 or 14, wherein the control system is the control system of claim 11.
